# EUROPEAN PATENT APPLICATION

(11) **EP 4 840 741 A1**
(43) Date of publication of application: **18.11.2026**
(21) Application number: 26178183.5
(22) Date of filing: 12.05.2026
(51) Int. Cl.: B62K 11/04, B62K 25/28, B62M 7/02

(54) **STRADDLED VEHICLE**

(30) Priority: 14.05.2025 JP 2025081334
(71) Applicant: Yamaha Hatsudoki Kabushiki Kaisha, Iwata-shi, Shizuoka 438-8501 (JP)
(72) Inventor: ARITA, Wataru, Iwata-shi, 4388501 (JP)
(74) Representative: Studio Torta S.p.A.

(57) **Abstract**

There is disclosed an engine (10) supported on a left upper frame (23), a right upper frame, and a down frame (27); a pivot shaft (40) pivotally supporting a front end portion (30B) of a swing arm (30); a pivot bracket (50, 150) being attached to the engine (10); the pivot bracket (50, 150) having a through hole that is open in the left-right direction; the pivot shaft (40) being inserted through the through hole (50a, 150a) of the pivot bracket (50, 150); the pivot shaft (40) being supported on the left -upper frame (23) and the right upper frame (25).

## Description

### Technical Field

The present invention relates to a straddled vehicle.

### Prior art

JP 2006-62646 A and JP 2014-184754 A disclose a motorcycle that includes a head pipe, a frame extending rearward from the head pipe, an engine supported on the frame, and a rear swing arm. The front end portion of the rear swing arm is pivotally supported on a pivot shaft. The rear portion of the rear swing arm supports the rear wheel. With the motorcycle disclosed in JP 2006-62646 A, the pivot shaft is inserted through the rear portion of the crankcase of the engine, and is supported on the crankcase. With the motorcycle disclosed in JP 2014-184754 A, a pivot bracket is linked to the crankcase of the engine. The pivot shaft is inserted through the pivot bracket, and is supported on the pivot bracket.

Now, with straddled vehicles, vehicle characteristics can be adjusted by appropriately setting the position of the pivot shaft. For example, by appropriately setting the position of the pivot shaft, it is possible to adjust the rigidity of the frame or the engine, and the anti-squat ratio, etc., of the vehicle.

With straddled vehicles where the pivot shaft is inserted through the crankcase, changing the position of the pivot shaft requires changing the structure of the crankcase. However, it is troublesome to later change the structure of the crankcase each time the pivot shaft is changed.

With the motorcycle disclosed in JP 2014-184754 A, by redesigning the pivot bracket according to the change of the position of pivot shaft, there is no need to change the structure of the crankcase. However, the motorcycle disclosed in JP 2014-184754 A requires a large and heavy pivot bracket. Therefore, there is a problem of the straddled vehicle becoming heavier.

The present invention has been made in view of this problem, and it is an object thereof to provide a straddled vehicle where the position of the pivot shaft can be changed without changing the structure of the crankcase of the engine and where weight increase is suppressed.

A straddled vehicle disclosed herein includes: a head pipe; a left upper frame connected to the head pipe and extending rearward; a right upper frame connected to the head pipe, extending rearward, and arranged rightward of the left upper frame; a down frame connected to the head pipe, extending rearward, and arranged downward relative to the left upper frame and the right upper frame; an engine supported on the left upper frame, the right upper frame, and the down frame; a swing arm including a front end portion and a rear end portion rotatably supporting a rear wheel; a pivot shaft pivotally supporting the front end portion of the swing arm; and a pivot bracket attached to the engine and having a through hole that is open in a left-right direction. The pivot shaft is inserted through the through hole of the pivot bracket and supported on the left upper frame and the right upper frame.

Thus, the pivot shaft is inserted through the pivot bracket rather than the crankcase. Therefore, the position of the pivot shaft can be adjusted by changing the shape, etc., of the pivot bracket. Therefore, the vehicle body characteristics of the straddled vehicle can be adjusted without changing the structure of the crankcase. Furthermore, the pivot shaft is supported not only by the pivot bracket but also by the left upper frame and the right upper frame. Therefore, it is easier to ensure the desired vehicle body rigidity and vehicle body strength without increasing the size or weight of the pivot bracket.

The engine may include a crankshaft extending in a left-right direction and a crankcase supporting the crankshaft. The down frame may include a connecting portion connected to the crankcase.

Thus, it is possible to improve the vehicle body rigidity and the vehicle body strength of the straddled vehicle.

The engine may include a crankshaft extending in a left-right direction and a crankcase supporting the crankshaft. The down frame may include a connecting portion located downward relative to the crankshaft and connected to the crankcase.

Thus, it is possible to further improve the vehicle body rigidity and the vehicle body strength of the straddled vehicle.

The left upper frame and the right upper frame may each have a rear end. The pivot shaft may be arranged forward relative to the rear ends of the left upper frame and the right upper frame.

Thus, the loads on the pivot shaft generated by the driving force and the braking force of the engine can be effectively received by the left upper frame and the right upper frame. As a result, it is possible to reduce the weight of the straddled vehicle. The shock absorbing capacity of the straddled vehicle is also improved.

The pivot bracket may be arranged between the left upper frame and the right upper frame for the left-right direction.

Thus, the driving force of the engine and the inertial force acting on the engine can be received while being distributed between the left upper frame and the right upper frame. As a result, it is possible to reduce the weight of the straddled vehicle. It is also possible to reduce the left-right difference of the vehicle body rigidity.

The pivot bracket may be spaced apart from the left upper frame and the right upper frame.

Thus, it is possible to reduce the size of the pivot bracket as compared to when the pivot bracket is not spaced apart from the left upper frame and the right upper frame. Thus, it is possible to reduce the weight of the straddled vehicle.

The engine may include a crankshaft extending in a left-right direction and a crankcase supporting the crankshaft. The pivot bracket may include an upper fixed portion fixed to the crankcase and located upward relative to the crankshaft, and a lower fixed portion fixed to the crankcase and located downward relative to the crankshaft.

Thus, for example, input in the rotational direction around the drive shaft can be received while being distributed. As a result, it is possible to reduce the weight of the straddled vehicle. It is also possible to reduce the vibration around the drive shaft, for example.

The pivot bracket may include: a main body portion with a through hole formed therein; a left upper leg portion extending upward from a left upper portion of the main body portion; a right upper leg portion extending upward from a right upper portion of the main body portion; a left lower leg portion extending downward from a left lower portion of the main body portion; and a right lower leg portion extending downward from a right lower portion of the main body portion. The left upper leg portion, the right upper leg portion, the left lower leg portion, and the right lower leg portion may be fixed to the engine.

Thus, the pivot bracket can be stably fixed to the engine.

The main body portion, the left upper leg portion, the right upper leg portion, the left lower leg portion, and the right lower leg portion may be integrally formed.

Thus, it is possible to reduce the number of parts in the straddled vehicle as compared to a configuration where the main body portion, the left upper leg portion, the right upper leg portion, the left lower leg portion, and the right lower leg portion are separate members.

An interval in a left-right direction between an upper end portion of the left upper leg portion and an upper end portion of the right upper leg portion may be longer than a length in the left-right direction of the main body portion. An interval in the left-right direction between a lower end portion of the left lower leg portion and a lower end portion of the right lower leg portion may be longer than the length in the left-right direction of the main body portion.

Thus, the pivot bracket can be stably fixed to the engine.

An upper end portion of the left upper leg portion, an upper end portion of the right upper leg portion, a lower end portion of the left lower leg portion, and a lower end portion of the right lower leg portion may be located forward relative to an axis of the pivot shaft.

Thus, the crankcase and the pivot shaft are arranged spaced apart from each other. Therefore, for example, where the vehicle body characteristics of the straddled vehicle are adjusted by increasing the outer diameter of the pivot shaft, the pivot shaft and the pivot bracket are less likely to interfere with the crankcase. Thus, the range of adjustment, for the vehicle body characteristics of the straddled vehicle is increased.

The pivot bracket may be fastened to the engine by a screw.

Thus, it is possible to easily perform the operation of attaching the pivot bracket to the engine and removing the pivot bracket from the engine. Therefore, it is possible to easily adjust the vehicle body characteristics of the straddled vehicle.

### Disclosure of the invention

According to the present invention, it is possible to provide a straddled vehicle where the position of the pivot shaft can be changed without changing the structure of the crankcase of the engine and where weight increase is suppressed.

### Brief description of the drawings

Fig. **1** is a left side view of a portion of a motorcycle according to one embodiment.
Fig. **2** is a left side view of the vehicle body frame and the engine according to one embodiment.
Fig. **3** is a right side view of the vehicle body frame and the engine according to one embodiment.
Fig. **4** is a perspective view showing, on an enlarged scale, the vicinity of the front end portion of the swing arm according to one embodiment.
Fig. **5** is a view showing, on an enlarged scale, the vicinity of the pivot bracket in Fig. **2****.**
Fig. **6** is a perspective view of the pivot bracket according to one embodiment.
Fig. **7** is a rear view showing, on an enlarged scale, the pivot bracket according to one embodiment.
Fig. **8** is a rear view showing, on an enlarged scale, the pivot bracket according to another embodiment.

### Embodiments of the invention

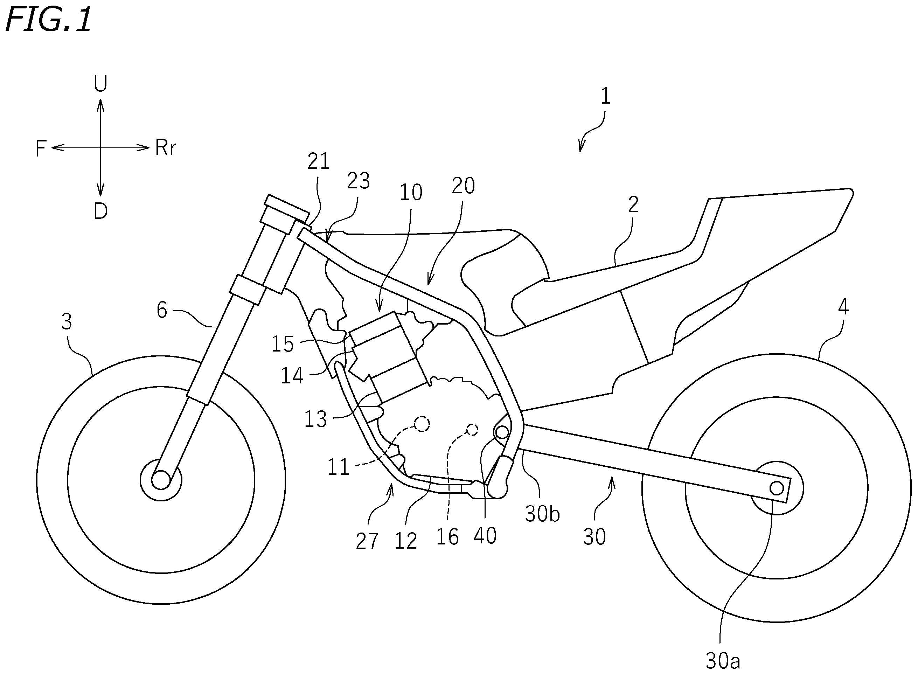

Embodiments of the technology disclosed herein will now be described with reference to the drawings. Fig. **1** is a left side view showing a portion of a motorcycle **1,** which is an example of the straddled vehicle.

The terms front, rear, left, right, up and down, as used in the description below, refer to these directions as seen from a virtual rider seated on a seat **2** while the motorcycle **1** is standing upright on a horizontal surface with no rider and no load thereon, unless specified otherwise. The designations F, Rr, L, R, U and D, as used in the figures, refer to front, rear, left, right, up and down, respectively.

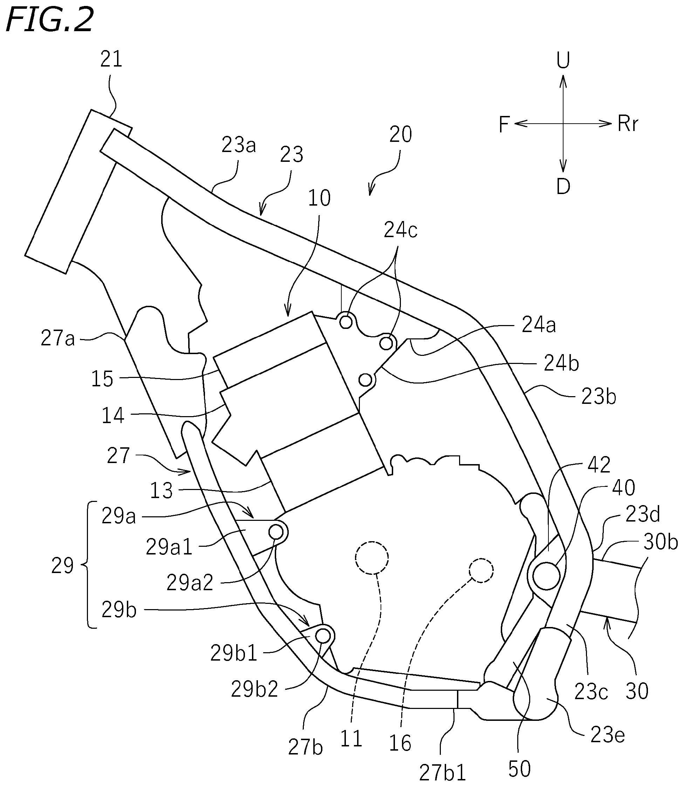

The motorcycle **1** includes the seat **2** on which the rider is seated, a front wheel **3,** a rear wheel **4,** an engine **10,** a vehicle body frame **20,** a swing arm **30,** a pivot shaft **40,** and a pivot bracket **50** (see Fig. **2**).

The engine **10** is the power source for driving the motorcycle **1.** In the present embodiment, the engine **10** is an internal combustion engine. The engine **10** includes a crankshaft **11,** a crankcase **12,** a cylinder body **13,** a cylinder head **14,** a cylinder head cover **15,** and a drive shaft **16.** The crankshaft **11** extends in the left-right direction. The crankcase **12** supports the crankshaft **11.** The crankshaft **11** is arranged inside the crankcase **12.** The cylinder body **13** is connected to the crankcase **12.** The cylinder body **13** extends upward and forward from the crankcase **12.** A cylinder (not shown) is arranged inside the cylinder body **13.** A piston (not shown) is arranged inside the cylinder. The cylinder head **14** is connected to the upper portion of the cylinder body **13.** The cylinder head cover **15** is connected to the upper portion of the cylinder head **14.** The drive shaft **16** is arranged rearward relative to the crankshaft **11.** Although not shown, the drive shaft **16** and the rear wheel **4** are linked together by a power transmission mechanism such as a chain.

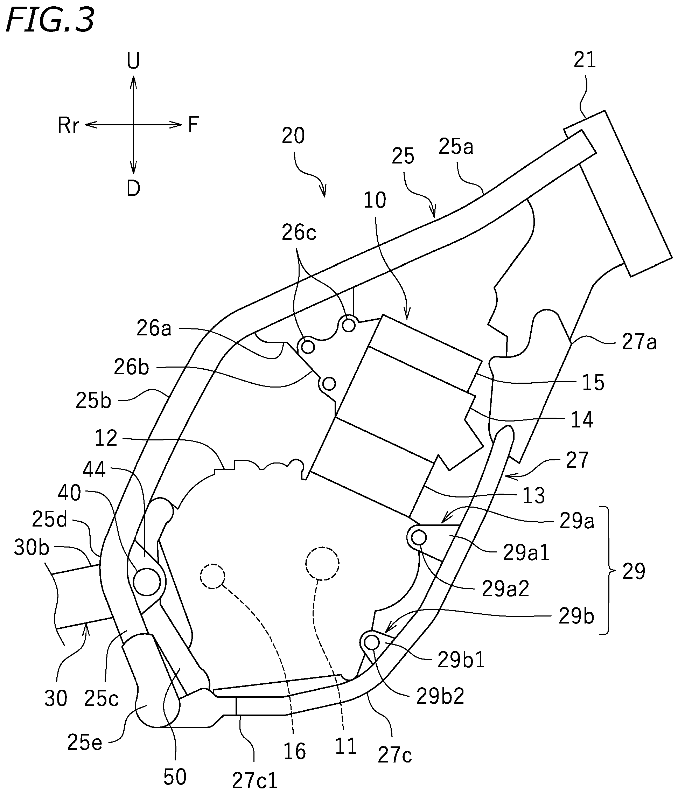

Fig. **2** is a left side view of the vehicle body frame **20** and the engine **10.** Fig. **3** is a right side view of the vehicle body frame **20** and the engine **10.** In Fig. **2** and Fig. **3****,** the front wheel **3,** the rear wheel **4,** the seat **2,** etc., are not shown. The vehicle body frame **20** is arranged so as to surround the engine **10.** As shown in Fig. **2** and Fig. **3****,** the vehicle body frame **20** includes a head pipe **21,** a left upper frame **23,** a right upper frame **25,** and a down frame **27.**

Although not shown, a steering shaft is inserted into the head pipe **21.** Although not shown, a handlebar is connected to the upper portion of the steering shaft. The lower portion of the steering shaft is connected to a front fork **6** (see Fig. **1**). As shown in Fig. **1****,** the front wheel **3** is connected to the lower end portion of the front fork **6.**

As shown in Fig. **2****,** the left upper frame **23** is connected to the head pipe **21.** In the present embodiment, the left upper frame **23** is directly connected to the head pipe **21.** The left upper frame **23** extends rearward from the head pipe **21.** The left upper frame **23** is arranged so as to surround the upper portion and the rear portion of the engine **10.** In the present embodiment, the left upper frame **23** includes a first portion **23a,** a second portion **23b,** and a third portion **23c.** In the present embodiment, the first portion **23a,** the second portion **23b,** and the third portion **23c** are formed by a single hollow tube. This tube may be made of, for example, a metal material. Note however that the first portion **23a,** the second portion **23b,** and the third portion **23c** may be formed by solid members. The first portion **23a** is connected to the head pipe **21.** The first portion **23a** extends rearward and downward from the head pipe **21.** The second portion **23b** is connected to the rear end of the first portion **23a.** The second portion **23b** extends rearward and downward from the rear end of the first portion **23a.** The inclination angle of the second portion **23b** is greater than the inclination angle of the first portion **23a.** Here, the inclination angle of the second portion **23b** refers to the angle formed between the horizontal plane and the second portion **23b,** and the inclination angle of the first portion **23a** refers to the angle formed between the horizontal plane and the first portion **23a.** The third portion **23c** is connected to the lower end of the second portion **23b.** The third portion **23c** extends forward and downward from the second portion **23b.**

The right upper frame **25** is connected to the head pipe **21.** In the present embodiment, the right upper frame **25** is directly connected to the head pipe **21.** The right upper frame **25** extends rearward from the head pipe **21.** The right upper frame is arranged rightward of the left upper frame **23.** The right upper frame **25** is arranged so as to surround the upper portion and the rear portion of the engine **10.** The right upper frame **25** has the same shape as the left upper frame **23** and is arranged in left-right symmetry with the left upper frame **23.** As does the left upper frame **23,** the right upper frame **25** includes a first portion **25a,** a second portion **25b,** and a third portion **25c.** The configurations of the first portion **25a,** the second portion **25b,** and the third portion **25c** of the right upper frame **25** are similar to those of the left upper frame **23,** and therefore the detailed description thereof is omitted here.

The left upper frame **23** has a rear end **23d.** In the present embodiment, the rear end **23d** of the left upper frame **23** is the rear end of the boundary portion between the second portion **23b** of the left upper frame **23** and the third portion **23c** of the left upper frame **23.** The right upper frame **25** has a rear end **25d.** In the present embodiment, the rear end **25d** of the right upper frame **25** is the rear end of the boundary portion between the second portion **25b** of the right upper frame **25** and the third portion **25c** of the right upper frame **25.** The rear end **23d** of the left upper frame **23** and the rear end **25d** of the right upper frame **25** are located rearward relative to the engine **10.**

The left upper frame **23** and the right upper frame **25** support the engine **10.** In the present embodiment, the left upper frame **23** and the right upper frame **25** support the cylinder head **14** of the engine **10.** In the present embodiment, a bracket **24a** attached to the first portion **23a** of the left upper frame **23** and a bracket **24b** attached to the cylinder head **14** are fastened together by screws **24c.** A bracket **26a** attached to the first portion **25a** of the right upper frame **25** and another bracket **26b** attached to the cylinder head **14** are fastened together by screws **26c.** Note that the configuration for supporting the engine **10** on the left upper frame **23** and the right upper frame **25** is not limited to the present embodiment.

The down frame **27** is connected to the head pipe **21.** The down frame **27** may be connected to the head pipe **21** directly or indirectly via another member. The down frame **27** extends rearward. Strictly speaking, the down frame **27** extends rearward and downward. The down frame **27** is arranged so as to surround the front portion and the lower portion of the engine **10.** The down frame **27** is arranged downward relative to the left upper frame **23** and the right upper frame **25.** The down frame **27** includes a base portion **27a,** a left down tube **27b,** and a right down tube **27c.** The left down tube **27b** and the right down tube **27c** have the same shape and are arranged in left-right symmetry.

The base portion **27a** extends rearward and downward from the head pipe **21.** The left down tube **27b** and the right down tube **27c** are connected to the base portion **27a.** The right down tube **27c** is arranged rightward relative to the left down tube **27b.** The left down tube **27b** and the right down tube **27c** extend rearward and downward from the base portion **27a.** In the present embodiment, the left down tube **27b** and the right down tube **27c** have the same shape and are arranged in left-right symmetry. In the present embodiment, the left down tube **27b** is formed by a single hollow tube, and the right down tube **27c** is formed by a single hollow tube. These tubes may be formed, for example, from a metal material. Note however that the left down tube **27b** and the right down tube **27c** may be formed by solid members.

In the present embodiment, a rear end portion **27b1** of the left down tube **27b** is connected to a lower end portion **23e** of the left upper frame **23.** Similarly, in the present embodiment, a rear end portion **27c1** of the right down tube **27c** is connected to a lower end portion **25e** of the right upper frame **25.**

The down frame **27** supports the engine **10.** The down frame **27** includes a connecting portion **29** connected to the crankcase **12.** In the present embodiment, the connecting portion **29** includes two first connecting portions **29a** and two second connecting portions **29b.** The two first connecting portions **29a** are located upward relative to the crankshaft **11.** One of the two first connecting portions **29a** is provided on the left down tube **27b,** and the other of the two first connecting portions **29a** is provided on the right down tube **27c.** In the present embodiment, the first connecting portion **29a** includes a first support member **29a1** provided on the left down tube **27b** or the right down tube **27c,** and a screw **29a2** that fastens together the first support member **29a1** and the crankcase **12.** The two second connecting portions **29b** are located downward relative to the crankshaft **11.** One of the two second connecting portions **29b** is provided on the left down tube **27b,** and the other of the two second connecting portions **29b** is provided on the right down tube **27c.** In the present embodiment, the second connecting portion **29b** includes a second support member **29b1** provided on the left down tube **27b** or the right down tube **27c,** and a screw **29b2** for fastening together the second support member **29b1** and the crankcase **12.**

As shown in Fig. **1****,** the swing arm **30** extends in the front-rear direction. The swing arm **30** includes a rear end portion **30a** and a front end portion **30b.** The rear end portion **30a** of the swing arm **30** rotatably supports the rear wheel **4.**

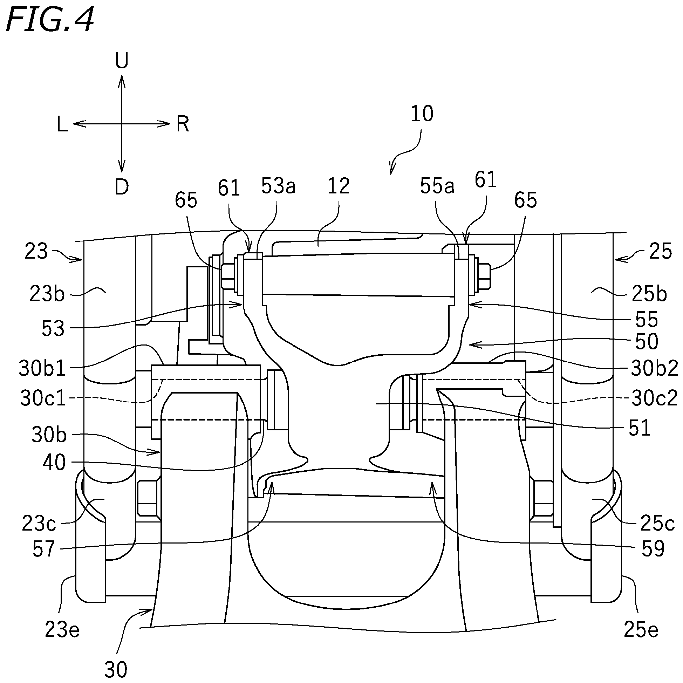

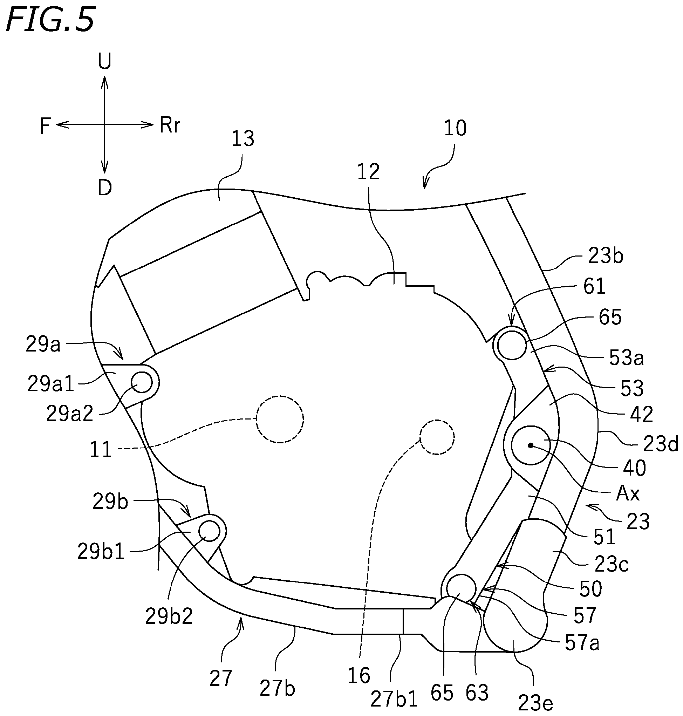

Fig. **4** is a perspective view showing, on an enlarged scale, the vicinity of the front end portion **30b** of the swing arm **30.** Fig. **5** is a view showing, on an enlarged scale, the vicinity of the pivot shaft **40** in Fig. **2****.** The front end portion **30b** includes a left front end portion **30b1** and a right front end portion **30b2.** The left front end portion **30b1** is arranged leftward relative to the right front end portion **30b2.** A through hole **30c1,** which is open in the left-right direction, is formed in the left front end portion **30b1** of the swing arm **30,** and a through hole **30c2,** which is open in the left-right direction, is formed in the right front end portion **30b2.** As viewed from the left-right direction, at least a part of the front end portion **30b** of the swing arm **30** overlaps with the lower end portion of the second portion **23b** and the upper end portion of the third portion **23c** of the left upper frame **23,** and overlaps with the lower end portion of the second portion **25b** and the upper end portion of the third portion **25c** of the right upper frame **25.**

The pivot shaft **40** pivotally supports the front end portion **30b** of the swing arm **30.** In the present embodiment, the pivot shaft **40** supports the swing arm **30** by being inserted through the through hole **30c1** formed in the left front end portion **30b1** of the swing arm **30** and the through hole **30c2** formed in the right front end portion **30b2.** The pivot shaft **40** extends in the left-right direction. As shown in Fig. **5****,** the pivot shaft **40** is arranged rearward relative to the engine **10.** In the present embodiment, the pivot shaft **40** is arranged forward relative to the rear end **23d** of the left upper frame **23** and the rear end **25d** of the right upper frame **25.**

As shown in Fig. **2** and Fig. **3****,** the pivot shaft **40** is supported on the left upper frame **23** and the right upper frame **25.** In the present embodiment, the pivot shaft **40** is fixed to a left support bracket **42** attached to the left upper frame **23** and a right support bracket **44** attached to the right upper frame **25.** The pivot shaft **40** may be fixed to the left support bracket **42** and the right support bracket **44** using, for example, screws (not shown).

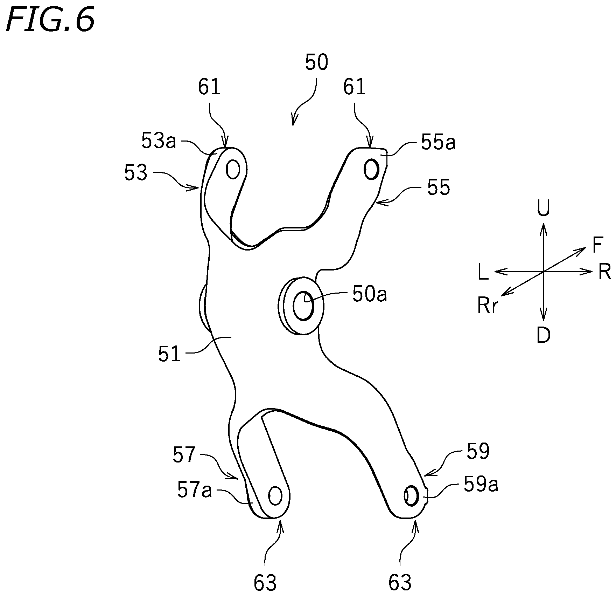

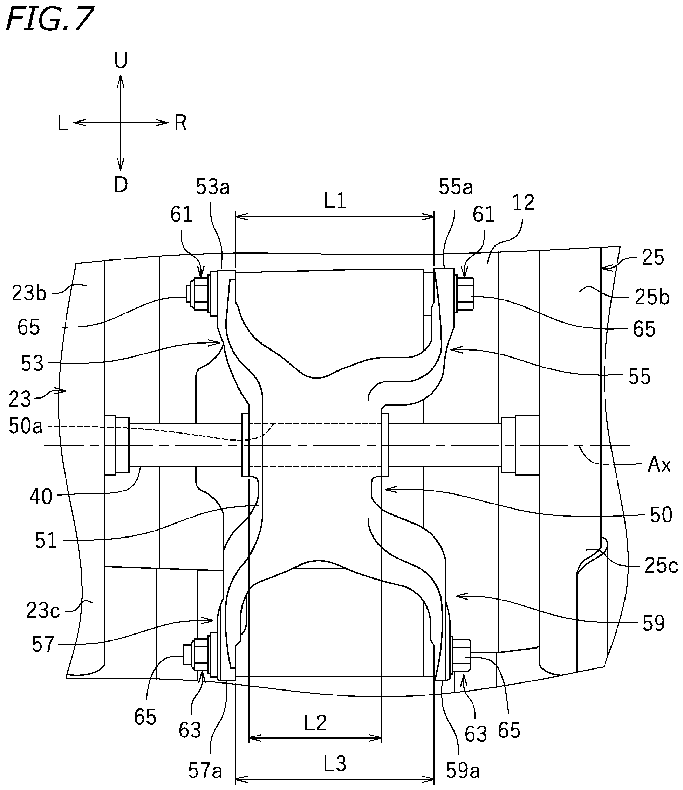

Fig. **6** is a perspective view of the pivot bracket **50.** Fig. **7** is a rear view showing, on an enlarged scale, the vicinity of the pivot bracket **50.** As shown in Fig. **6****,** the pivot bracket **50** includes a main body portion **51,** a left upper leg portion **53,** a right upper leg portion **55,** a left lower leg portion **57,** and a right lower leg portion **59.** The left upper leg portion **53** extends upward from the left upper portion of the main body portion **51.** More specifically, the left upper leg portion **53** extends upward and forward from the left upper portion of the main body portion **51.** The right upper leg portion **55** extends upward from the right upper portion of the main body portion **51.** More specifically, the right upper leg portion **55** extends upward and forward from the right upper portion of the main body portion **51.** The left lower leg portion **57** extends downward from the left lower portion of the main body portion **51.** More specifically, the left lower leg portion **57** extends downward and forward from the left lower portion of the main body portion **51.** The right lower leg portion **59** extends downward from the right lower portion of the main body portion **51.** More specifically, the right lower leg portion **59** extends downward and forward from the right lower portion of the main body portion **51.** In the present embodiment, the main body portion **51,** the left upper leg portion **53,** the right upper leg portion **55,** the left lower leg portion **57,** and the right lower leg portion **59** are integrally formed. That is, in the present embodiment, the pivot bracket **50** is a single-piece member. The pivot bracket **50** may be composed of a metal material, such as a steel material, for example.

The pivot bracket **50** has a through hole **50a,** which is open in the left-right direction. In the present embodiment, the through hole **50a** is formed in the main body portion **51.** The pivot shaft **40** is inserted through the through hole **50a.** As shown in Fig. **5****,** in the present embodiment, an upper end portion **53a** of the left upper leg portion **53,** an upper end portion **55a** of the right upper leg portion **55,** a lower end portion **57a** of the left lower leg portion **57,** and a lower end portion **59a** of the right lower leg portion **59** are located forward relative to the axis **Ax** of the pivot shaft **40.** In the present embodiment, the lower end portion **57a** of the left lower leg portion **57** and the lower end portion **59a** of the right lower leg portion **59** are located forward relative to the upper end portion **53a** of the left upper leg portion **53** and the upper end portion **55a** of the right upper leg portion **55.**

The pivot bracket **50** is attached to the engine **10.** More specifically, the pivot bracket **50** is attached to the rear portion of the crankcase **12** of the engine **10.** In the present embodiment, the pivot bracket **50** includes upper fixed portions **61** and lower fixed portions **63.** The upper fixed portions **61** and the lower fixed portions **63** are fixed to the crankcase **12.** In the present embodiment, the upper fixed portions **61** and the lower fixed portions **63** are fastened to the crankcase **12** by screws **65.** The upper fixed portions **61** are located upward relative to the crankshaft **11.** The lower fixed portions **63** are located downward relative to the crankshaft **11.** As shown in Fig. **7****,** in the present embodiment, the upper fixed portions **61** are the upper end portion **53a** of the left upper leg portion **53** and the upper end portion **55a** of the right upper leg portion **55.** The lower fixed portions **63** are the lower end portion **57a** of the left lower leg portion **57** and the lower end portion **59a** of the right lower leg portion **59.** That is, in the present embodiment, the pivot bracket **50** is attached to the engine **10** by fixing the left upper leg portion **53,** the right upper leg portion **55,** the left lower leg portion **57,** and the right lower leg portion **59** to the crankcase **12.**

In the present embodiment, the interval **L1** in the left-right direction between the upper end portion **53a** of the left upper leg portion **53** and the upper end portion **55a** of the right upper leg portion **55** is longer than the length **L2** in the left-right direction of the main body portion **51.** In the present embodiment, the interval **L3** in the left-right direction between the lower end portion **57a** of the left lower leg portion **57** and the lower end portion **59a** of the right lower leg portion **59** is longer than the length **L2** in the left-right direction of the main body portion **51.** Here, "the length **L2** in the left-right direction of the main body portion **51"** refers to the length in the left-right direction at a portion of the main body portion **51** where the length in the left-right direction is largest.

The pivot bracket **50** is located between the left upper frame **23** and the right upper frame **25** for the left-right direction. In other words, the pivot bracket **50** is arranged rightward relative to the left upper frame **23** and leftward relative to the right upper frame **25.** In the present embodiment, the pivot bracket **50** is arranged spaced apart from the left upper frame **23** and the right upper frame **25.** As shown in Fig. **4****,** the pivot bracket **50** is arranged between the left front end portion **30b1** and the right front end portion **30b2** of the swing arm **30** for the left-right direction. The main body portion **51** of the pivot bracket **50** is arranged rightward of the left front end portion **30b1** and leftward of the right front end portion **30b2.**

According to the present embodiment, the pivot shaft **40** is inserted through the through hole **50a** of the pivot bracket **50** attached to the engine **10.** With this configuration, the pivot shaft **40** is inserted through the pivot bracket **50** rather than the crankcase **12.** Therefore, the position of the pivot shaft **40** can be adjusted by changing the shape, etc., of the pivot bracket **50.** Therefore, the vehicle body characteristics of the motorcycle **1** can be adjusted without changing the structure of the crankcase **12.** Furthermore, according to the present embodiment, the pivot shaft **40** is supported not only by the pivot bracket **50** but also by the left upper frame **23** and the right upper frame **25.** Therefore, it is easier to ensure the vehicle body rigidity and the vehicle body strength of the motorcycle **1** without increasing the size or weight of the pivot bracket **50.**

According to the present embodiment, the down frame **27** includes a connecting portion **29** connected to the crankcase **12** of the engine **10.** Thus, it is possible to improve the vehicle body rigidity and the vehicle body strength of the motorcycle **1.** More specifically, in the present embodiment, the connecting portion **29** includes the second connecting portion **29b** located downward relative to the crankshaft **11.** Thus, it is possible to further improve the vehicle body rigidity and the vehicle body strength of the motorcycle **1.**

According to the present embodiment, the pivot shaft **40** is arranged forward relative to the rear end **23d** of the left upper frame **23** and the rear end **25d** of the right upper frame **25.** The loads on the pivot shaft **40** generated by the driving force and the braking force of the engine **10** can be effectively received by the left upper frame **23** and the right upper frame **25.** As a result, it is possible to reduce the weight of the motorcycle **1.** The shock absorbing capacity of the motorcycle **1** is also improved.

According to the present embodiment, the pivot bracket **50** is arranged between the left upper frame **23** and the right upper frame **25** for the left-right direction. Thus, the driving force of the engine **10** and the inertial force acting on the engine **10** can be received while being distributed between the left upper frame **23** and the right upper frame **25.** As a result, it is possible to reduce the weight of the motorcycle **1.** It is also possible to reduce the left-right difference of the vehicle body rigidity.

According to the present embodiment, the pivot bracket **50** is spaced apart from the left upper frame **23** and the right upper frame **25.** Thus, it is possible to reduce the size of the pivot bracket **50** as compared to when the pivot bracket **50** is not spaced apart from the left upper frame **23** and the right upper frame **25.** Thus, it is possible to reduce the weight of the motorcycle **1.**

According to the present embodiment, the pivot bracket **50** includes the upper fixed portions **61** that are fixed to the crankcase **12** and located upward relative to the crankshaft **11,** and the lower fixed portions **63** that are fixed to the crankcase **12** and located downward relative to the crankshaft **11.** Thus, for example, the input in the rotational direction around the drive shaft **16** can be received while being distributed. As a result, it is possible to reduce the weight of the motorcycle **1.** It is also possible to reduce the vibration around the drive shaft **16,** for example.

According to the present embodiment, the pivot bracket **50** is fixed to the engine **10** by fixing the left upper leg portion **53,** the right upper leg portion **55,** the left lower leg portion **57,** and the right lower leg portion **59** of the pivot bracket **50** to the engine **10.** Thus, the pivot bracket **50** can be stably fixed to the engine **10.**

According to the present embodiment, the main body portion **51,** the left upper leg portion **53,** the right upper leg portion **55,** the left lower leg portion **57,** and the right lower leg portion **59** of the pivot bracket **50** are integrally formed. Thus, it is possible to reduce the number of parts in the motorcycle **1** as compared to a configuration where the main body portion **51,** the left upper leg portion **53,** the right upper leg portion **55,** the left lower leg portion **57,** and the right lower leg portion **59** are separate members.

According to the present embodiment, as shown in Fig. **7****,** the interval **L1** in the left-right direction between the upper end portion **53a** of the left upper leg portion **53** and the upper end portion **55a** of the right upper leg portion **55** is longer than the length **L2** in the left-right direction of the main body portion **51.** The interval **L3** in the left-right direction between the lower end portion **57a** of the left lower leg portion **57** and the lower end portion **59a** of the right lower leg portion **59** is longer than the length **L2** in the left-right direction of the main body portion **51.** Thus, the pivot bracket **50** can be stably fixed to the engine **10.**

According to the present embodiment, the upper end portion **53a** of the left upper leg portion **53,** the upper end portion **55a** of the right upper leg portion **55,** the lower end portion **57a** of the left lower leg portion **57,** and the lower end portion **59a** of the right lower leg portion **59** are located forward relative to the axis **Ax** of the pivot shaft **40.** Thus, the crankcase **12** and the pivot shaft **40** are arranged spaced apart from each other. Therefore, for example, where the vehicle body characteristics of the motorcycle **1** are adjusted by increasing the outer diameter of the pivot shaft **40,** the pivot shaft **40** and the pivot bracket **50** are less likely to interfere with the crankcase **12.** Thus, the range of adjustment for the vehicle body characteristics of the motorcycle **1** is increased.

According to the present embodiment, the pivot bracket **50** is fastened to the engine **10** by the screws **65.** Thus, it is possible to easily perform the operation of attaching the pivot bracket **50** to the engine **10** and removing the pivot bracket **50** from the engine **10.** Therefore, it is possible to easily adjust the vehicle body characteristics of the motorcycle **1.**

While one embodiment of the technology disclosed herein has been described above, the embodiment described above is merely illustrative, and various other embodiments are possible.

In the embodiment described above, the left upper frame **23** and the right upper frame **25** are directly connected to the head pipe **21.** However, the left upper frame **23** and the right upper frame **25** may be connected to the head pipe **21** via another member. In the present specification, "the left upper frame **23** is connected to the head pipe **21"** includes a case where they are connected directly and a case where they are connected indirectly. Similarly, "the right upper frame **25** is connected to the head pipe **21"** includes a case where they are connected directly and a case where they are connected indirectly. For example, a single main pipe (not shown) extending rearward may be directly connected to the head pipe **21.** The left upper frame **23** and the right upper frame **25** may be directly connected to the main pipe and connected to the head pipe **21** via the main pipe. This main pipe may be a hollow member or a solid member.

The configuration of the down frame **27** is not limited to the embodiment described above. For example, in the embodiment described above, the down frame **27** includes the base portion **27a,** the left down tube **27b,** and the right down tube **27c.** However, for example, the down frame **27** does not need to include the base portion **27a.** The left down tube **27b** and the right down tube **27c** may be directly connected to the head pipe **21.**

In the embodiment described above, the rear end portion **27b1** of the left down tube **27b** is connected to the lower end portion **23e** of the left upper frame **23,** and the rear end portion **27c1** of the right down tube **27c** is connected to the lower end portion **25e** of the right upper frame **25.** However, the rear end portion **27b1** of the left down tube **27b** does not need to be connected to the lower end portion **23e** of the left upper frame **23,** and the rear end portion **27c1** of the right down tube **27c** does not need to be connected to the lower end portion **25e** of the right upper frame **25.**

The position where the engine **10** is fixed is not limited to the embodiment described above. For example, in the embodiment described above, the down frame **27** includes the first connecting portion **29a** and the second connecting portion **29b.** However, for example, the down frame **27** may not include one of the first connecting portion **29a** and the second connecting portion **29b.**

The shape, etc., of the pivot bracket **50** are not limited to those of the embodiment described above. The pivot bracket **50** only needs to be configured so that the pivot shaft **40** can be inserted therethrough. The pivot bracket **50** does not need to be an integral member. For example, the main body portion **51,** the left upper leg portion **53,** the right upper leg portion **55,** the left lower leg portion **57,** and the right lower leg portion **59** of the pivot bracket **50** may be separate members.

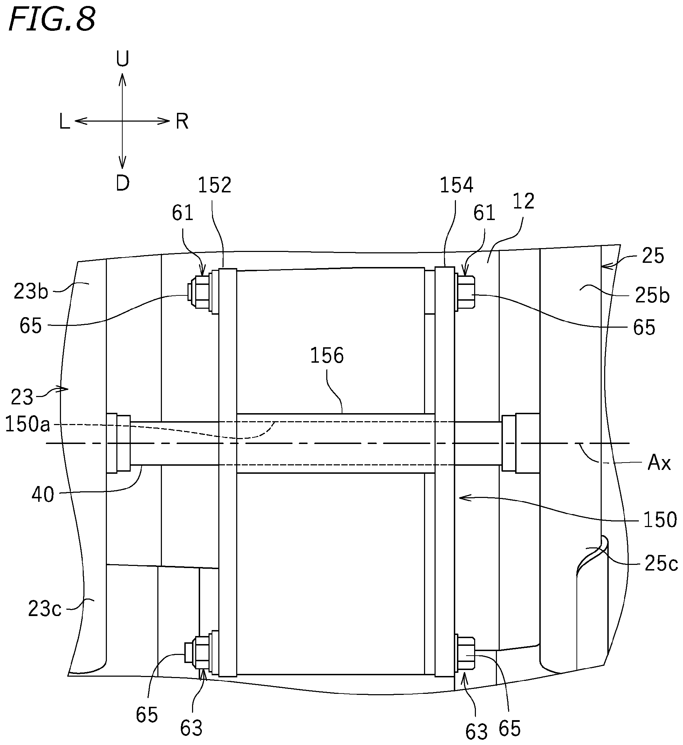

Fig. **8** is a rear view showing, on an enlarged scale, the vicinity of a pivot bracket **150** according to another embodiment. As shown in Fig. **8****,** the pivot bracket **150** may include a left plate **152,** a right plate **154,** and a pipe **156.** The left plate **152** and the right plate **154** may be plate-like members extending in the up-down direction and the front-rear direction. The left plate **152** and the right plate **154** may be fastened to the crankcase **12** by the screws **65.** The right plate **154** may be arranged rightward relative to the left plate **152.** The pipe **156** may extend in the left-right direction. The pipe **156** may be formed hollow and may have a through hole **150a,** which is open in the left-right direction. The pipe **156** may be connected to the left plate **152** and the right plate **154.** The pipe **156** may, for example, be welded to the left plate **152** and the right plate **154.** The pipe **156** may be fastened to the left plate **152** and the right plate **154** by screws (not shown). The pipe **156** may have a flange (not shown). The pivot shaft **40** may be inserted through the through hole **150a.**

In the embodiment described above, the pivot shaft **40** is arranged forward relative to the rear end **23d** of the left upper frame **23** and the rear end **25d** of the right upper frame **25.** However, the pivot shaft **40** may be arranged, for the front-rear direction, at the same position as the rear end **23d** of the left upper frame **23** and the rear end **25d** of the right upper frame **25.** The pivot shaft **40** may be arranged rearward relative to the rear end **23d** of the left upper frame **23** and the rear end **25d** of the right upper frame **25.**

A straddled vehicle is a vehicle that is straddled by the rider. A straddled vehicle is not limited to the motorcycle **1.** For example, a straddled vehicle may be a motor tricycle, an ATV (All Terrain Vehicle), or a snowmobile.

### Reference Signs List

1: Motorcycle (straddled vehicle), 10: Engine, 11: Crankshaft, 12: Crankcase, 21: Head pipe, 23: Left upper frame, 23d: Rear end of left upper frame, 25: Right upper frame, 25d: Rear end of right upper frame, 29: Connecting portion, 30: Swing arm, 30a: Rear end portion of swing arm, 30b: Front end portion of swing arm, 40: Pivot shaft, 50, 150: Pivot bracket, 50a, 150a: Through hole, 51: Main body portion, 53: Left upper leg portion, 55: Right upper leg portion, 57: Left lower leg portion, 59: Right lower leg portion, 61: Upper fixed portion, 63: Lower fixed portion, 65: Screw

## Claims

1. A straddled vehicle (**1**) comprising:
a head pipe (**21**);
a left upper frame (**23**) connected to the head pipe (**21**) and extending rearward;
a right upper frame (**25**) connected to the head pipe (**21**), extending rearward, and arranged rightward of the left upper frame (**23**);
a down frame (**27**) connected to the head pipe (**21**), extending rearward, and arranged downward relative to the left upper frame (**23**) and the right upper frame (**25**);
an engine (**10**) is supported on the left upper frame (**23**), the right upper frame (**25**), and the down frame (**27**);
a swing arm (**30**) including a front end portion (**30b**) and a rear end portion (**30a**) rotatably supporting a rear wheel (**4**);
a pivot shaft (**40**) pivotally supporting the front end portion (**30b**) of the swing arm (**30**); and
a pivot bracket (**50, 150**) attached to the engine (**10**) and having a through hole (**50a, 150a**) that is open in a left-right direction,
wherein the pivot shaft (**40**) is inserted through the through hole (**50a, 150a**) of the pivot bracket (**50, 150**) and supported on the left upper frame (**23**) and the right upper frame (**25**).

2. The straddled vehicle (**1**) according to claim 1, wherein:
the engine (**10**) includes a crankshaft (**11**) extending in a left-right direction and a crankcase (**12**) supporting the crankshaft (**11**); and
the down frame (**27**) includes a connecting portion (**29**) connected to the crankcase (**12**).

3. The straddled vehicle (**1**) according to claim 1, wherein:
the engine (**10**) includes a crankshaft (**11**) extending in a left-right direction and a crankcase (**12**) supporting the crankshaft (**11**); and
the down frame (**27**) includes a connecting portion (**29, 29b**) located downward relative to the crankshaft (**11**) and connected to the crankcase (**12**).

4. The straddled vehicle (**1**) according to claim 2 or 3, wherein:
the pivot bracket (**50, 150**) includes an upper fixed portion (**61**) fixed to the crankcase (**12**) and located upward relative to the crankshaft (**11**), and a lower fixed portion (**63**) fixed to the crankcase (**12**) and located downward relative to the crankshaft (**11**).

5. The straddled vehicle (**1**) according to any one of claim 1, wherein:
the engine (**10**) includes a crankshaft (**11**) extending in a left-right direction and a crankcase (**12**) supporting the crankshaft (**11**); and
the pivot bracket (**50, 150**) includes an upper fixed portion (**61**) fixed to the crankcase (**12**) and located upward relative to the crankshaft (**11**), and a lower fixed portion (**63**) fixed to the crankcase (**12**) and located downward relative to the crankshaft (**11**).

6. The straddled vehicle (**1**) according to any one of claims 1 to 5, wherein:
the left upper frame (**23**) and the right upper frame (**25**) each have a rear end (**23d, 25d**); and
the pivot shaft (**40**) is arranged forward relative to the rear ends (**23d, 25d**) of the left upper frame (**23**) and the right upper frame (**25**).

7. The straddled vehicle (**1**) according to any one of claims 1 to 6, wherein the pivot bracket (**50, 150**) is arranged between the left upper frame (**23**) and the right upper frame (**25**) for the left-right direction.

8. The straddled vehicle (**1**) according to claim 7, wherein the pivot bracket (**50, 150**) is spaced apart from the left upper frame (**23**) and the right upper frame (**25**).

9. The straddled vehicle (**1**) according to any one of claims 1 to 8, wherein:
the pivot bracket (**50**) includes:
a main body portion (**51**) with a through hole (**50a**) formed therein;
a left upper leg portion (**53**) extending upward from a left upper portion of the main body portion (**51**);
a right upper leg portion (**55**) extending upward from a right upper portion of the main body portion (**51**);
a left lower leg portion (**57**) extending downward from a left lower portion of the main body portion (**51**); and
a right lower leg portion (**59**) extending downward from a right lower portion of the main body portion (**51**); and
the left upper leg portion (**53**), the right upper leg portion (**55**), the left lower leg portion (**57**), and the right lower leg portion (**59**) are fixed to the engine (**10**).

10. The straddled vehicle (**1**) according to claim 9, wherein the main body portion (**51**), the left upper leg portion (**53**), the right upper leg portion (**55**), the left lower leg portion (**57**), and the right lower leg portion (**59**) are integrally formed.

11. The straddled vehicle (**1**) according to claim 9 or 10, wherein:
an interval in a left-right direction between an upper end portion (**53a**) of the left upper leg portion (**53**) and an upper end portion (**55a**) of the right upper leg portion (**55**) is longer than a length in the left-right direction of the main body portion (**51**); and
an interval in the left-right direction between a lower end portion (**57a**) of the left lower leg portion (**57**) and a lower end portion (**59a**) of the right lower leg portion (**59**) is longer than the length in the left-right direction of the main body portion (**51**).

12. The straddled vehicle (**1**) according to any one of claims 9 to 11, wherein an upper end portion (**53a**) of the left upper leg portion (**53**), an upper end portion (**55a**) of the right upper leg portion (**55**), a lower end portion (**57a**) of the left lower leg portion (**57**), and a lower end portion (**59a**) of the right lower leg portion (**59**) are located forward relative to an axis (**Ax**) of the pivot shaft (**40**).

13. The straddled vehicle (**1**) according to any one of claims 1 to 12, wherein the pivot bracket (**50, 150**) is fastened to the engine (**10**) by a screw (**65**).
